# EUROPEAN PATENT SPECIFICATION

(11) **EP 4 362 214 B1**
(45) Date of publication and mention of the grant of the patent: **22.07.2026**
(21) Application number: 21946394.0
(22) Date of filing: 23.06.2021
(51) Int. Cl.: H01M 50/586, H01M 4/13

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(43) Date of publication of application: 01.05.2024
(73) Proprietor: Ningde Amperex Technology Ltd., Ningde City, Fujian Province PRC 352100 (CN)
(72) Inventor: LI, Xuecheng, Ningde City Fujian Province 352100 (CN)
(74) Representative: Icosa
(86) International application number: PCT/CN2021/101876
(87) International publication number: WO 2022/266894

(56) References cited:
- WO-A1-2015/080305
- WO-A1-2021/131094
- CN-A- 111 313 102
- JP-A- 2011 081 920
- JP-A- 2011 081 920
- JP-A- 2016 081 848
- JP-A- 2017 084 533
- JP-A- 2020 087 710
- JP-A- 2020 087 710

## Description

### TECHNICAL FIELD

This application relates to the technical field of electrochemistry, and in particular, to an electrochemical device and an electronic device.

### BACKGROUND

Currently, users are increasingly favoring high-capacity (for example, a capacity not less than 6 Ah) batteries capable of fast charging, which requires a battery to have a higher electrolyte content. The increase in the electrolyte content in the battery increases hazards of failures caused by dropping of the battery. Voltage drop failure is the most common type of failure caused by dropping of the battery, and is the trickiest type of failure. The voltage drop failure is caused by contact and a short circuit between a positive electrode plate and a negative electrode plate at a shrunk position of a separator, where the separator at the head part and end part of an electrode assembly shrinks after being impacted by an electrolytic solution when the electrode assembly drifts in an accommodation device (such as aluminum plastic film) due to dropping of the battery.

To solve the foregoing problems, one method is to suppress the shrinkage of the separator by increasing a bonding force of the separator, so as to suppress the voltage drop failure. However, the increase of the bonding force of the separator leads to deterioration of electrical performance of the battery. Especially, in a high-rate fast charge system (for example, a charging system in which a charge rate is not less than 3 C), the deterioration is more evident. Another method is to reduce the impact of free electrolytic solution on the separator by reducing the electrolyte content in the battery. However, the excessively low electrolyte content affects later cycles of the battery, accelerates aging of the battery, and reduces the service life. Therefore, it is necessary to provide a design to solve such problems.

International Patent Application WO 2015/080305 A1 discloses an electrode assembly according to a prior art of the invention, comprising a cathode and an anode between which is placed a separation film and having active materials coated on current collectors.

### SUMMARY

In view of the fact above, this application provides an electrochemical device to alleviate the problem of voltage drop failure without affecting the electrical performance.

In addition, an electronic device is provided.

According to a first aspect of this application, an electrochemical device is provided in accordance with claim 1.

The current collector is overlaid with the insulation layer first, and then coated with the active material layer. The insulation layer can prevent electrons in this region from flowing from the current collector to the active material layer, thereby deenergizing the electrode plates in the region. This can prevent a short circuit caused by contact between the positive electrode plate and the negative electrode plate at the head part and the end part of the outermost coil of the battery when the separator shrinks upon dropping of the battery, thereby mitigating the hazards of voltage drop failure caused by the dropping. If the current collector is coated with the active material layer first and then the active material layer is overlaid with the insulation layer, the active material layer contacts the current collector, and the active material layer can still gain and lose electrons normally and perform lithium intercalation and deintercalation. In this case, the electrode plate in this region is in an energized state. When the insulation layer disposed on the active material layer is too thin or not applied, the hazard of contact and short circuits between the positive electrode plate and the negative electrode plate still exists. In addition, an interfacial bonding force between the active material layer and the current collector is weaker than the interfacial bonding force between the insulation layer and the current collector. When being dropped, an electrochemical device with a current collector overlaid with the active material layer first and then coated with the insulation layer is prone to detachment of the active material layer and exposure of the current collector, thereby short-circuiting the positive electrode plate and the negative electrode plate, generating heat rapidly, incurring a voltage drop, and deteriorating the safety performance. Therefore, the current collector needs to be overlaid with the insulation layer first and then coated with the active material layer to alleviate the problem of voltage drop failure. Moreover, this technical solution avoids reducing the electrolyte content, and avoids affecting the electrical performance of the electrochemical device.

In accordance with the invention, the electrode assembly is formed by winding the first electrode plate, the second electrode plate, and the separator. The first surface is disposed toward a winding center, and the second surface is disposed away from the winding center.

In some embodiments, the electrochemical device further includes a second active material layer disposed on the second surface. The first current collector includes a first region and a second region that are disposed along a length direction of the electrode plate. The first active material layer is disposed on the first surface of the first region and the first surface of the second region. The second active material layer is disposed on the second surface of the first region.

In some embodiments, the electrochemical device further includes a tab electrically connected to the first current collector. The first current collector includes a first end and a second end that are disposed along a width direction of the electrode plate. The tab is disposed at the first end. The first insulation layer is disposed in at least one of the following regions: a first end of the first region, a first end of the second region, and a first end of the third region; or, a second end of the first region, a second end of the second region, and a second end of the third region. Generally, the separator mainly shrinks toward the middle of the separator along the width direction of the electrode plate. In other words, the separator located at the first end or the second end is prone to shrink. Therefore, the hazard of voltage drop failure is relatively high at the first end of the first region, the first end of the second region, the first end of the third region, the second end of the first region, the second end of the second region, and the second end of the third region. The first insulation layer disposed at such positions can more effectively prevent the hazard of voltage drop failure and improve the safety performance of the electrochemical device.

In some embodiments, an extension length of the first insulation layer along a width direction of the electrode plate is not greater than 10 mm. The larger the extension length of the first insulation layer along the width direction of the electrode plate, the more effectively the voltage drop failure can be prevented. However, the first insulation layer occupies an internal space of the electrode assembly, thereby reducing the energy density of the electrode assembly. As found by the applicant of this application in experiments, when the extension length of the first insulation layer is not greater than 10 mm, the hazard of voltage drop failure can be effectively prevented, and the impact on the energy density of the electrode assembly is within an acceptable range.

In some embodiments, the first insulation layer includes a first insulation material, and the first insulation material includes at least one of aluminum oxide, zirconium oxide, or chrome oxide. In some embodiments, the first insulation material includes at least one of aluminum oxide ceramic, zirconium oxide ceramic, or chrome oxide ceramic.

In some embodiments, the electrochemical device further includes a second insulation layer disposed on the second surface. The second insulation layer is at least disposed on at least one of the first end or the second end of the first region. The second insulation layer is located between the first current collector and the second active material layer. With the second insulation layer disposed in the first region of the second surface, when the separator close to the second surface shrinks, the second insulation layer can prevent transmission of electrons of the current collector at the position of the second insulation layer to the second active material layer, thereby deenergizing the electrode plate in this region. No short circuit occurs even if the first electrode plate contacts the second electrode plate, thereby improving the safety performance of the electrochemical device. The separator mainly shrinks toward the middle of the separator along the width direction of the electrode plate. In other words, the separator located at the first end or the second end is prone to shrink. Therefore, the hazard of voltage drop failure is more likely to occur at the first end of the first region and the second end of the first region. The second insulation layer disposed at such positions can more effectively prevent the hazard of voltage drop failure and further improve the safety performance of the electrochemical device.

In some embodiments, an extension length of the second insulation layer disposed in the first region along the width direction of the electrode plate is not greater than 10 mm. The larger the extension length of the second insulation layer along the width direction of the electrode plate, the more effectively the voltage drop failure can be prevented. However, the second insulation layer occupies an internal space of the electrode assembly, thereby reducing the energy density of the electrode assembly. As found by the applicant of this application in experiments, when the extension length of the second insulation layer falls within the range of 2 mm to 10 mm, the hazard of voltage drop failure can be effectively prevented, and the impact on the energy density of the electrode assembly is within an acceptable range.

In some embodiments, the second insulation layer is further disposed in at least one of the second region or the third region. Understandably, the separator corresponding to an empty foil region (a region not coated with the active material layer) at the end of the electrode assembly is prone to shrinkage. The hazard of voltage drop failure in this region is relatively high. With the second insulation layer disposed in the second region and/or the third region, the second insulation layer can prevent transmission of electrons between the first current collector and the second electrode plate. No short circuit occurs even if the first electrode plate contacts the second electrode plate, thereby improving the safety performance of the electrochemical device.

In some embodiments, the second region includes a first part and a second part that are disposed along a length direction of the electrode plate. The second insulation layer is further disposed at the second part. The second insulation layer disposed at the second part can prevent transmission of electrons between the first current collector and the second electrode plate. No short circuit occurs even if the first electrode plate contacts the second electrode plate, thereby improving the safety performance of the electrochemical device.

In some embodiments, a ratio of an extension length of the second insulation layer along the width direction of the electrode plate to an extension length of the first current collector along the width direction of the electrode plate is not less than 50%, where the second insulation layer is disposed in the second region or the third region.

In some embodiments, the second insulation layer includes a second insulation material. The second insulation material includes at least one of aluminum oxide, zirconium oxide, or chrome oxide. In some embodiments, the second insulation material includes at least one of aluminum oxide ceramic, zirconium oxide ceramic, or chrome oxide ceramic.

In some embodiments, the electrochemical device further includes an accommodation device that accommodates the electrode assembly. The accommodation device includes a first accommodation portion and a second accommodation portion. A depth of the first accommodation portion is less than a depth of the second accommodation portion. When accommodated in the accommodation device, the first part contacts the first accommodation portion, and the second part contacts the second accommodation portion.

In some embodiments, the first electrode plate is a positive electrode plate, and the second electrode plate includes a second current collector. Along a width direction of the electrode plate, a rate of difference between an extension length of the first current collector and an extension length of the second current collector is not greater than 5%. Understandably, the rate of difference being not greater than 5% is equivalent to that the extension length of the first current collector along the width direction of the electrode plate is equal to the extension length of the second current collector along the width direction of the electrode plate. In this way, the separator can be clamped by the edges of the first current collector and the second current collector, and the separator is less likely to slip, thereby preventing the hazard of voltage drop failure more effectively.

In an example not part of the invention, the electrode assembly is formed by stacking the first electrode plate, the second electrode plate, and the separator along a first direction. The first current collector includes a first end and a second end that are disposed along a second direction, and a third end and a fourth end that are disposed along a third direction. The second direction is perpendicular to the first direction, the third direction is perpendicular to the second direction, and the first insulation layer is disposed on at least one of the first end, the second end, the third end, or the fourth end. Understandably, the hazard of voltage drop failure is relatively high at the first end, the second end, the third end, or the fourth end in the stacked electrode assembly when the separator shrinks. The first insulation layer disposed at such positions can more effectively prevent the hazard of voltage drop failure and improve the safety performance of the electrochemical device.

In some embodiments, an extension length of the first insulation layer along the second direction is not greater than 10 mm. Such settings can prevent the hazard of voltage drop failure effectively while bringing an insignificant impact on the energy density of the electrode assembly.

In some embodiments, the electrochemical device further includes a second insulation layer disposed on the second surface. The second insulation layer is disposed on at least one of the first end, the second end, the third end, or the fourth end. The second insulation layer further disposed can prevent voltage drop failure more effectively and improve the safety performance of the electrochemical device.

In some embodiments, the extension length of the second insulation layer along the second direction is not greater than 10 mm. Such settings can prevent the hazard of voltage drop failure effectively while bringing an insignificant impact on the energy density of the electrode assembly.

This application further provides an electronic device. The electronic device includes the electrochemical device described above, and the electrochemical device supplies power to the electronic device.

In the electrochemical device and the electronic device according to this application, the insulation layer is disposed between the current collector and the active material layer to block up an electronic channel in this region. Even if the positive electrode plate contacts the negative electrode plate due to shrinkage of the separator, no short circuit occurs because the electrode plates in the insulation layer region are deenergized, thereby alleviating the problem of voltage drop failure. In addition, the electrical performance of the electrochemical device and the electronic device is not affected because the electrolyte content of the electrochemical device according to this application is not reduced.

### BRIEF DESCRIPTION OF DRAWINGS

The following describes this application in more detail with reference to drawings and specific embodiments.
FIG. 1 is a schematic structural diagram of an electrochemical device according to an embodiment of this application;
FIG. 2 is a schematic structural diagram of a first current collector according to an embodiment of this application;
FIG. 3 is a schematic structural diagram of an accommodation device according to an embodiment of this application;
FIG. 4A is a schematic structural diagram of a first electrode plate according to an embodiment of this application;
FIG. 4B is a schematic structural diagram of the first electrode plate shown in FIG. 4A and coated with an active material layer;
FIG. 5A is a schematic structural diagram of a first electrode plate according to an embodiment of this application;
FIG. 5B is a schematic structural diagram of the first electrode plate shown in FIG. 5A and coated with an active material layer;
FIG. 6 is a schematic structural diagram of an electrochemical device according to an embodiment of this application;
FIG. 7A is a schematic structural diagram of a first electrode plate according to an embodiment of this application;
FIG. 7B is a schematic structural diagram of the first electrode plate shown in FIG. 7A and coated with an active material layer;
FIG. 8 is a schematic structural diagram of an electrochemical device according to an embodiment of this application;
FIG. 9 is a schematic structural diagram of an electrochemical device according to an example not part of the invention;
FIG. 10 is a schematic structural diagram of a first current collector according to an example not part of the invention;
FIG. 11A is a schematic structural diagram of a first electrode plate according to an example not part of the invention;
FIG. 11B is a schematic structural diagram of the first electrode plate shown in FIG. 11A and coated with an active material layer; and
FIG. 12 is an enlarged view of a part A shown in FIG. 9.

**Reference numerals of main components:**

| | |
|---|---|
| Electrochemical device | 100 |
| Electrode assembly | 10 |
| Tab | 30 |
| Accommodation device | 50 |
| First accommodation portion | 51 |
| Second accommodation portion | 52 |
| First electrode plate | 101 |
| Second electrode plate | 103 |
| Separator | 105 |
| First current collector | 1011 |
| First surface | 1012 |
| Second surface | 1014 |
| First active material layer | 1013 |
| First insulation layer | 1015 |
| Second active material layer | 1017 |
| Second insulation layer | 1019 |
| First region | 102 |
| Second region | 104 |
| Third region | 106 |
| First end | 1016 |
| Second end | 1018 |
| Third end | 1020 |
| Fourth end | 1022 |
| First part | 1041 |
| Second part | 1042 |
| Length direction of the electrode plate | X |
| Width direction of the electrode plate | Y |
| Thickness direction | Z |
| First direction | Z' |
| Second direction | X' |
| Third direction | Y' |

The following further describes the embodiments of this application with reference to the drawings.

### DETAILED DESCRIPTION OF EMBODIMENTS

Unless otherwise defined, all technical and scientific terms used herein have the same meanings as usually understood by a person skilled in the technical field of this application. The terms used herein are merely intended to describe specific embodiments but not to limit the embodiments of this application.

It needs to be noted that all directional indicators (for example, up, down, left, right, front, back, and so on) in the embodiments of this application are merely used to explain a relative position relationship, movement state and the like between components in a specific posture (as shown in the drawings). When the specific posture changes, the directional indicators change accordingly.

It is to be understood that, when a layer is referred to as being "on" another layer, it may be directly on the other layer, or may be interspaced with an intermediate layer in between. By contrast, when a layer is referred to as being "directly on" another layer, there is no intermediate layer.

With respect to the terms "greater than" and "less than" used in this application, it is to be understood that, unless otherwise specified, the terms "greater than" and "less than" in this application mean "substantially greater than" and "substantially less than" respectively. In comparing the magnitude between one object (a first object) and another object (a second object), there are calculation and measurement errors, and there are errors caused by processes (for example, unevenness of a coating layer caused by a coating process). For example, the error may be within ±2%. To eliminate the effect of such error, it is defined herein that, so long as a ratio of a difference between the first object and the second object to the second object is greater than 5%, the first object is different from the second object not because of the error, but because the first object is substantially greater than or less than the second object. Understandably, depending on the actual situation, the ratio may be adjusted to 10%, 15%, 20%, and the like.

In addition, the terms such as "first" and "second" used herein are merely intended for ease of description, but not understood as indicating or implying priority or implicitly specifying the number of technical features mentioned. Therefore, a feature qualified by "first" or "second" may explicitly or implicitly include at least one such feature. In the description of this application, unless otherwise expressly specified, "a plurality of" means at least two, for example, two, three, or more.

According to the technical solution of this application, the safety performance of a battery is improved by disposing an insulation layer on at least one of a positive electrode plate or a negative electrode plate of a battery, and disposing the insulation layer between a current collector and an active material layer.

The insulation layer is disposed in a specific region of the electrode plate. By disposing the insulation layer between the current collector and the active material layer, the insulation layer can prevent electrons from flowing from the current collector in this region to the active material layer in this region. The electrode plate in this region is insulated as a whole. This can prevent a short circuit caused by contact between the positive electrode plate and the negative electrode plate when the separator shrinks upon dropping of the battery, thereby mitigating the hazards of voltage drop failure caused by the dropping. If the current collector is coated with the active material layer and then the active material layer is overlaid with the insulation layer, the active material layer contacts the current collector, and the active material layer can still gain and lose electrons normally and perform lithium intercalation and deintercalation. In this case, the electrode plate in this region is in an energized state. When the insulation layer disposed on the active material layer is too thin or not applied, the hazard of contact and short circuits between the positive electrode plate and the negative electrode plate still exists. In addition, an interfacial bonding force between the active material layer and the current collector is weaker than the interfacial bonding force between the insulation layer and the current collector. When being dropped, an electrochemical device with a current collector coated with the active material layer first and then overlaid with the insulation layer is prone to detachment of the active material layer and exposure of the current collector, thereby short-circuiting the positive electrode plate and the negative electrode plate, generating heat rapidly, incurring a voltage drop, and deteriorating the safety performance. Therefore, the current collector needs to be coated with the insulation layer directly and then coated with the active material layer to alleviate the problem of voltage drop failure. Moreover, this technical solution avoids reducing the electrolyte content, and ensures the electrical performance of the electrochemical device.

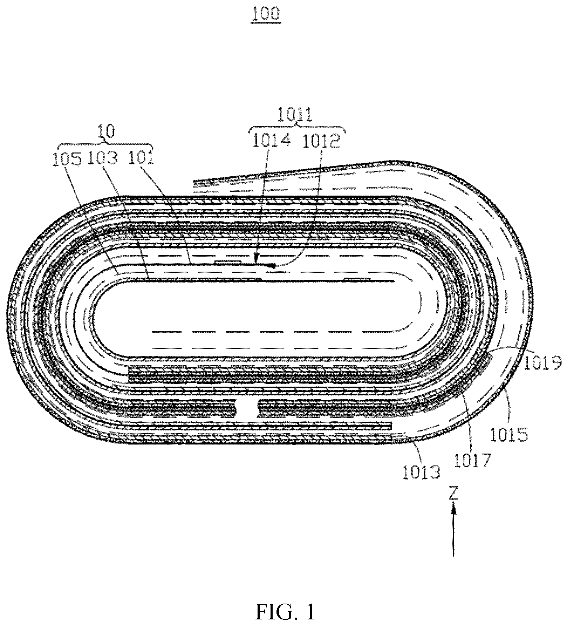

Referring to FIG. 1, this application provides an electrochemical device 100, including an electrode assembly 10. A direction Z shown in the drawing is a thickness direction of the electrode assembly 10. The electrochemical device 100 may be, but is not limited to, a battery, for example, a secondary battery (such as a lithium-ion secondary battery, a sodium-ion battery, a magnesium-ion battery), or a primary battery (such as a lithium primary battery). The electrochemical device 100 may include an electrode assembly 10 and an electrolyte.

The electrode assembly 10 includes a first electrode plate 101, a second electrode plate 103, and a separator 105 located between the first electrode plate 101 and the second electrode plate 103. The first electrode plate 101 includes a first current collector 1011, a first active material layer 1013, and a first insulation layer 1015.

The first electrode plate 101 may be a positive electrode plate or a negative electrode plate. When the first electrode plate 101 is a positive electrode plate, the second electrode plate 103 is a negative electrode plate. When the first electrode plate 101 is a negative electrode plate, the second electrode plate 103 is a positive electrode plate. Correspondingly, the first current collector 1011 may be a positive current collector or a negative current collector. The first active material layer 1013 may be a positive active material layer or a negative active material layer.

The positive current collector may be an aluminum foil, or may be another type of current collector commonly used in the art. In some embodiments, the thickness of the current collector of the positive electrode plate may be 1 µm to 50 µm. In some embodiments, the current collector of the negative electrode plate may be at least one of a copper foil, a nickel foil, or a carbon-based current collector. In some embodiments, the thickness of the current collector of the negative electrode plate may be 1 µm to 50 µm.

The negative current collector may be a negative current collector commonly used in the art. The negative current collector may be made of a metal foil or a porous metal sheet or another material, for example, a foil or porous plate made of metal such as copper, nickel, titanium, or iron, or an alloy thereof, such as a copper foil. The positive active material layer is disposed on at least one surface of the positive current collector. The positive active material layer includes a positive active material. The positive active material includes a compound in which lithium ions can be intercalated reversibly and from which lithium ions can be deintercalated reversibly (that is, a lithiated intercalation compound). In some embodiments, the positive active material may include a lithium transition metal composite oxide. The lithium transition metal composite oxide contains lithium and at least one element selected from cobalt, manganese, or nickel. In some embodiments, the positive active material is at least one selected from: lithium cobalt oxide (LiCoO₂), lithium nickel-cobalt-manganese ternary material (NCM), lithium manganese oxide (LiMn₂O₄), lithium nickel manganese oxide (LiNi_{0.5}Mn_{1.5}O₄), or lithium iron phosphate (LiFePO₄).

The negative active material layer is disposed on at least one surface of the negative current collector. The negative active material layer contains a negative active material, and adopts a negative active material that is known in the art and capable of reversible deintercalation of active ions, without being limited in this application. For example, the negative active material may include, but is not limited to, one of or any combination of graphite, soft carbon, hard carbon, carbon fiber, mesocarbon microbeads, silicon-based material, tin-based material, lithium titanium oxide, or other metals that can combine with lithium into an alloy. The graphite may be one of or any combination of artificial graphite, natural graphite, or modified graphite. The silicon-based material may be one of or any combination of simple-substance silicon, a silicon-oxygen compound, a silicon-carbon composite, a silicon alloy, or the like. The tin-based material may be one of or any combination of simple-substance tin, a tin-oxide compound, a tin alloy, or the like.

The separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and improve stability of the battery through a turn-off effect. In some embodiments, the thickness of the separator is within a range of approximately 5 µm to 50 µm.

The first insulation layer 1015 is disposed on the first electrode plate 101, and can prevent transmission of electrons of the current collector at the position thereof to the first active material layer 1013. In some embodiments, the electronic conductivity of the first insulation layer 1015 is not higher than 1010 Ω·m.

The first insulation layer 1015 may include a first insulation material. The first insulation material includes at least one of aluminum oxide ceramic, zirconium oxide ceramic, or chrome oxide ceramic. As an example, the first insulation material includes aluminum oxide ceramic. In some embodiments, the first insulation layer 1015 may further include a binder that bonds the first insulation material onto the first electrode plate 101 more firmly. The binder may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene.

An extension length of the first insulation layer 1015 along the width direction Y of the electrode plate is not greater than 10 mm. In some embodiments, the extension length of the first insulation layer 1015 is 2 mm to 10 mm, for example, 4 mm to 8 mm, 4 mm to 6 mm, or the like. In some embodiments, the extension length of the first insulation layer 1015 is not less than 2 mm. Generally, the larger the extension length of the first insulation layer 1015 along the width direction Y of the electrode plate, the more effectively the voltage drop failure can be prevented. However, the first insulation layer 1015 occupies an internal space of the electrode assembly 10, thereby reducing the energy density of the electrode assembly 10. As found by the applicant of this application in experiments, when the extension length of the first insulation layer 1015 falls within the range of 2 mm to 10 mm, the hazard of voltage drop failure can be effectively prevented (for example, by 90% or more), and the impact on the energy density of the electrode assembly 10 is within an acceptable range. Further, when the extension length of the first insulation layer 1015 is not greater than 2 mm, the hazard of voltage drop failure can be effectively prevented (for example, by approximately 70%), and the impact on the energy density of the electrode assembly 10 is insignificant.

The first current collector 1011 includes a first surface 1012 and a second surface 1014 that are disposed opposite to each other. The first active material layer 1013 is disposed on the first surface 1012. The first insulation layer 1015 is located between the first current collector 1011 and the first active material layer 1013.

The first current collector 1011 is overlaid with the first insulation layer 1015 first and then coated with the first active material layer 1013. The first insulation layer 1015 is disposed on the first electrode plate 101. A part that is of the first electrode plate 101 and overlaid with the first insulation layer 1015 is referred to as a region corresponding to the first insulation layer 1015. Correspondingly, the first current collector 1011 in this region is referred to as a current collector corresponding to the first insulation layer 1015, and the first active material layer 1013 in this region is referred to as an active material layer corresponding to the first insulation layer 1015. In the region corresponding to the first insulation layer 1015, the first insulation layer 1015 can prevent electrons from flowing from the corresponding current collector to the corresponding active material layer, thereby deenergizing the electrode plate in this region and improving the safety performance of the battery. In some embodiments, the first insulation layer 1015 is directly disposed on the first electrode plate 101. The active material layer usually contains ingredients of low adhesivity such as conductive agent and active materials. Therefore, the first insulation layer 1015 bonds more firmly to the first current collector 1011 than the active material layer, and is less likely to fall off.

As shown in FIG. 1, the electrode assembly 10 is formed by winding the first electrode plate 101, the second electrode plate 103, and the separator 105. The first surface 1012 is disposed toward a winding center of the electrode assembly 10 (briefly referred to as a winding center), and the second surface 1014 is disposed away from the winding center. The electrochemical device 100 further includes a second active material layer 1017 disposed on the second surface 1014.

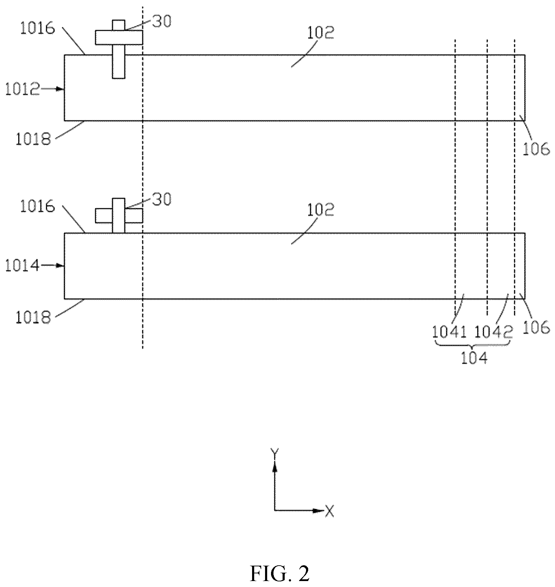

Referring to FIG. 2, the electrochemical device 100 further includes a tab 30 electrically connected to the first current collector 1011. The first current collector 1011 includes a first end 1016 and a second end 1018 that are disposed along a width direction Y of the electrode plate. The tab 30 is disposed at the first end 1016. The first current collector 1011 includes a first region 102, a second region 104, and a third region 106 that are disposed along a length direction X of the electrode plate. In some embodiments, the second region 104 and the third region 106 are located at an end part of the first current collector 1011. In some embodiments, the end part of the first current collector 1011 is located at an outermost coil of the electrode assembly 10. In some embodiments, the end part of the first current collector 1011 is located at the outermost coil and a second-outermost coil of the electrode assembly 10.

The second region 104 includes a first part 1041 and a second part 1042 that are disposed along the length direction X of the electrode plate. When being accommodated in an accommodation device (such as the accommodation device 50), the second part 1042 is accommodated in a deep pit of the accommodation device. For the description about the deep pit, refer to other relevant parts of this application.

The first active material layer 1013 is disposed on the first surface 1012 of the first region 102 and the first surface 1012 of the second region 104. The second active material layer 1017 is disposed on the second surface 1014 of the first region 102.

In this application, the "end" means a region of extension that extends from the edge inward by 30%. For example, the first end 1016 of the first electrode plate 101 has a first edge, and the first end 1016 of the first electrode plate 101 means a region of extension that extends from the first edge to the inner side of the first electrode plate 101 by 30%.

The first insulation layer 1015 is at least disposed in at least one of the following regions: a first end 1016 of the first region 102, a first end 1016 of the second region 104, and a first end 1016 of the third region 106; or, a second end 1018 of the first region 102, a second end 1018 of the second region 104, and a second end 1018 of the third region 106. Generally, when the separator 105 shrinks, the hazard of voltage drop failure is relatively high at the first end 1016 of the first region 102, the first end 1016 of the second region 104, the first end 1016 of the third region 106, the second end 1018 of the first region 102, the second end 1018 of the second region 104, and the second end 1018 of the third region 106. The first insulation layer 1015 disposed at such positions can more effectively prevent the hazard of voltage drop failure and improve the safety performance of the electrochemical device.

In some embodiments, the first insulation layer 1015 runs through the first electrode plate 101 along the length direction (X direction) of the electrode plate. Specifically, the length of the first insulation layer 1015 along the length direction of the electrode plate is substantially equal to the length of the first electrode plate 101 along the length direction of the electrode plate. It needs to be pointed out that along the length direction of the electrode plate, the widths of the first insulation layer 1015 in different regions of the first electrode plate 101 may be substantially equal. For example, the first insulation layer 1015 in at least two of the first region 102, the second region 104, or the third region 106 of the first electrode plate 101 has the same width-the length along the width direction Y of the electrode plate. For example, at least two of the following three widths are substantially equal: the width of the first insulation layer 1015 disposed on the first surface of the first region 102, the width of the first insulation layer 1015 disposed on the first surface of the second region 104, and the width of the first insulation layer 1015 disposed on the first surface of the third region 106. Two values are referred to as being "substantially equal" or "substantially the same" when the rate of difference between the two values is within 20%. Understandably, depending on the test method, two values being "substantially equal" or "substantially the same" may mean that the rate of difference between the two values is within 15%, within 10%, within 5%, or the like instead. The rate of difference between two values is a ratio of an absolute value of a difference between the two values to the smaller of the two values.

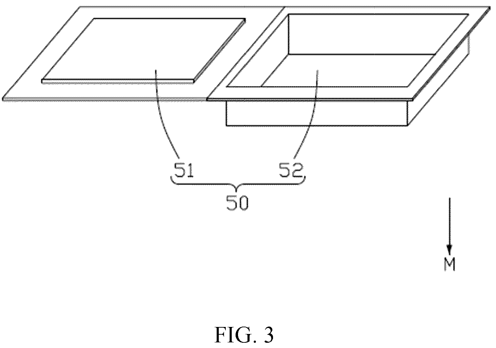

Referring to FIG. 3, the electrochemical device 100 further includes an accommodation device 50 configured to accommodate the electrode assembly 10. The accommodation device 50 includes a first accommodation portion 51 and a second accommodation portion 52. A depth of the first accommodation portion 51 is less than a depth of the second accommodation portion 52. The accommodation device 50 may be an aluminum plastic film commonly used in the art or the like, without being limited in this application.

As shown in FIG. 3, the depth of the first accommodation portion 51 and the depth of the second accommodation portion 52 are the extension lengths of the two accommodation portions along the M direction respectively.

In an embodiment, the electrochemical device 100 further includes a second insulation layer 1019 disposed on the second surface 1014. The second insulation layer 1019 is at least disposed on at least one of the first end 1016 of the first region 102 or the second end 1018 of the first region 102. The second insulation layer 1019 is located between the first current collector 1011 and the second active material layer 1017. With the second insulation layer 1019 disposed in the first region 102 of the second surface 1014, when the separator 105 close to the second surface 1014 shrinks, the second insulation layer 1019 can prevent transmission of electrons of the current collector at the position of the second insulation layer to the second active material layer 1017, thereby deenergizing the electrode plate in this region. No short circuit occurs even if the first electrode plate 101 contacts the second electrode plate 103, thereby improving the safety performance of the electrochemical device 100. The separator 105 mainly shrinks toward the middle of the separator 105 along the width direction Y of the electrode plate. In other words, the separator 105 located at the first end 1016 or the second end 1018 is prone to shrink. Therefore, the hazard of voltage drop failure is more likely to occur at the first end 1016 of the first region 102 and the second end 1018 of the first region 102. The second insulation layer 1019 disposed at such positions can more effectively prevent the hazard of voltage drop failure and further improve the safety performance of the electrochemical device 100.

In some embodiments, the second insulation layer 1019 runs through the second electrode plate 103 along the length direction (X direction) of the electrode plate. Specifically, the length of the second insulation layer 1019 along the length direction of the electrode plate is substantially equal to the length of the second electrode plate 103 along the length direction of the electrode plate. It needs to be pointed out that along the length direction of the electrode plate, the settings of the second insulation layer 1019 in different regions of the second electrode plate 103 may vary. For example, the second insulation layer 1019 in at least two of the first region 102, the second region 104, or the third region 106 of the second electrode plate 103 has different widths-the lengths along the width direction Y of the electrode plate. For example, the width of the second insulation layer 1019 disposed on the second surface of the third region 106 is greater than the width of the second insulation layer 1019 disposed on the second surface of the first region 102. For another example, the width of the second insulation layer 1019 disposed on the second surface of the third region 106 is greater than the width of the second insulation layer 1019 disposed on the second surface of the second region 104.

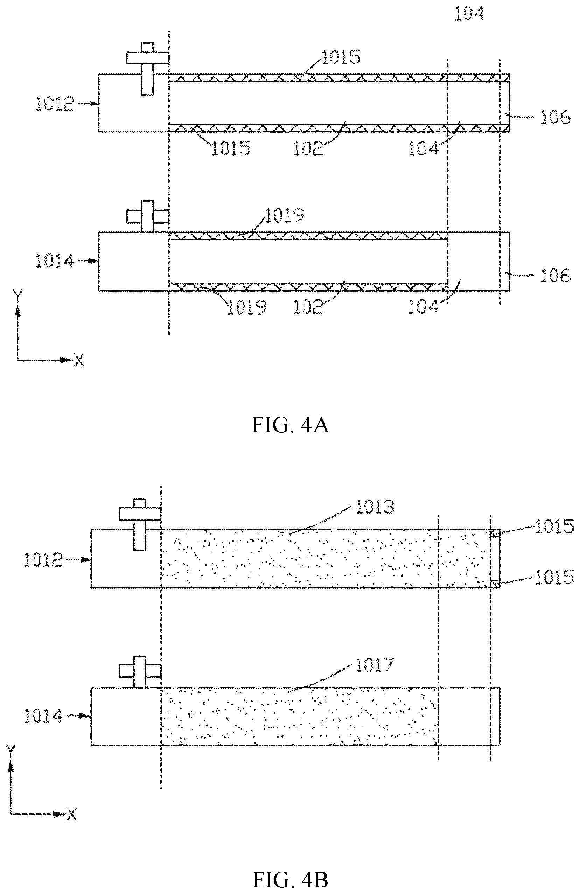

Referring to FIG. 2 and FIG. 4A, the electrochemical device 100 includes the first insulation layer disposed on the first surface 1012 and the second insulation layer 1019 disposed on the second surface 1014. The first insulation layer 1015 is disposed at the first end 1016 of the first region 102, the first end 1016 of the second region 104, the first end 1016 of the third region 106, the second end 1018 of the first region 102, the second end 1018 of the second region 104, and the second end 1018 of the third region 106. The second insulation layer 1019 is disposed at the first end 1016 of the first region 102 and the second end 1018 of the first region 102. The first electrode plate 101 shown in FIG. 4A is further coated with an active material layer to obtain the first electrode plate 101 shown in FIG. 4B. Referring to FIG. 4B, the first active material layer 1013 is disposed on the first surface 1012 of the first region 102 and the first surface 1012 of the second region 104. The second active material layer 1017 is disposed on the second surface 1014 of the first region 102.

The first region 102 is a double-side-coated region, where both the side oriented toward the winding center and the side oriented away from the winding center are coated with the active material layer. The second region 104 is a single-side-coated region, where the side oriented toward the winding center is coated with the active material layer, but the side oriented away from the winding center is not coated with the active material layer. The first electrode plate 101, the separator 105, and the second electrode plate 103 shown in FIG. 4B are wound to obtain a jelly-roll structure shown in FIG. 1.

The electrode assembly 10 shown in FIG. 1 is accommodated in the accommodation device 50. The first part 1041 is accommodated in at least the first accommodation portion 51, and the second part 1042 is accommodated in the second accommodation portion 52. A part of the first part 1041 is accommodated in the first accommodation portion 51. The first accommodation portion 51 overlays the part of the first part 1041. The part of the first part 1041 directly contacts the first accommodation portion 51 or contacts the first accommodation portion through an intermediate component. The second part 1042 is accommodated in the second accommodation portion 52. The second accommodation portion 52 overlays the second part 1042. The second part 1042 directly contacts the second accommodation portion 52 or contacts the second accommodation portion through an intermediate component.

The part of the first part 1041 contacts the first accommodation portion 51, and the second part 1042 contacts the second accommodation portion 52. Correspondingly, in some embodiments, the first part 1041 and the second part 1042 are referred to as a shallow pit side and a deep pit side, respectively. Understandably, the first insulation layer 1015 disposed at the first end 1016 of the second region 104 and the second end 1018 of the second region 104 is located in both the first accommodation portion 51 and the second accommodation portion 52.

In a dropping process, the electrode assembly 10 drifts in the accommodation device 50. When the electrolytic solution impacts the separator 105 at the head part and end part of the electrode assembly 10 and causes the separator 105 to shrink, the first insulation layer 1015 can prevent electrons from flowing from the current collector to the active material layer, and therefore, the first electrode plate 101 in the region corresponding to the first insulation layer 1015 is deenergized. In this region, no short circuit occurs even if this region contacts the second electrode plate 103, thereby mitigating the hazard of voltage drop failure. Similarly, the second insulation layer 1019 can prevent electrons from flowing from the current collector to the active material layer. The first electrode plate 101 in the region corresponding to the second insulation layer 1019 is deenergized. In this region, no short circuit occurs even if this region contacts the second electrode plate 103, thereby further mitigating the hazard of voltage drop failure.

In an embodiment, the second insulation layer 1019 is further disposed in at least one of the second region 104 or the third region 106.

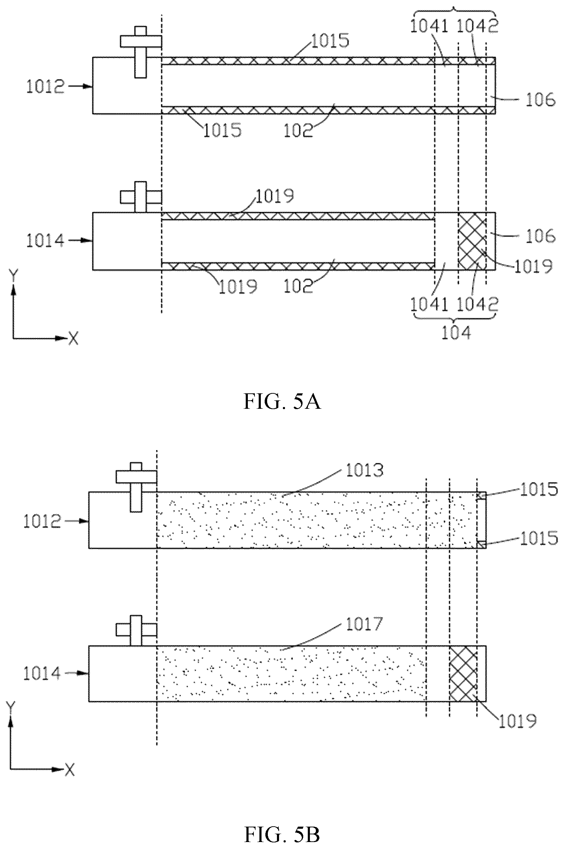

Referring to FIG. 2 and FIG. 5A, the first insulation layer 1015 is disposed at the first end 1016 of the first region 102, the first end 1016 of the second region 104, the first end 1016 of the third region 106, the second end 1018 of the first region 102, the second end 1018 of the second region 104, and the second end 1018 of the third region 106. The second insulation layer 1019 is disposed at the first end 1016 of the first region 102, the second end 1018 of the first region 102, and the second part 1042. Understandably, the second insulation layer 1019 may be disposed at the first end 1016 of the first region 102, the second end 1018 of the first region 102, and the first part 1041 instead.

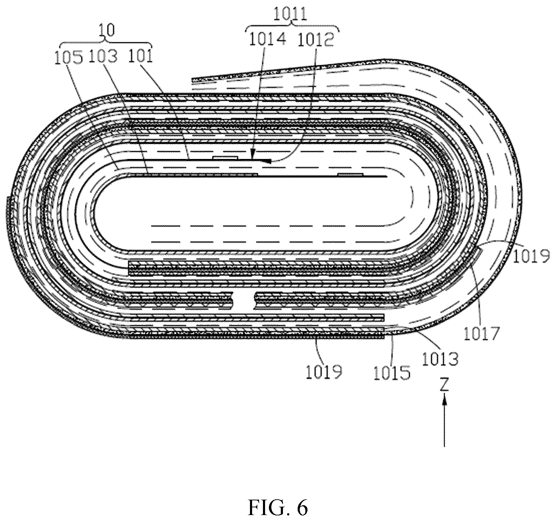

The first electrode plate 101 shown in FIG. 5A is further coated with an active material layer to obtain the first electrode plate 101 shown in FIG. 5B. Referring to FIG. 5B, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 5B are wound to obtain a jelly-roll structure shown in FIG. 6.

When the electrode assembly 10 shown in FIG. 6 is accommodated in the accommodation device 50, the first part 1041 contacts the first accommodation portion 51, and the second part 1042 contacts the second accommodation portion 52. Understandably, the first insulation layer 1015 disposed at the first end 1016 of the second region 104 and the second end 1018 of the second region 104 is located in both the first accommodation portion 51 and the second accommodation portion 52. The second insulation layer 1019 disposed at the second part 1042 is located in the second accommodation portion 52.

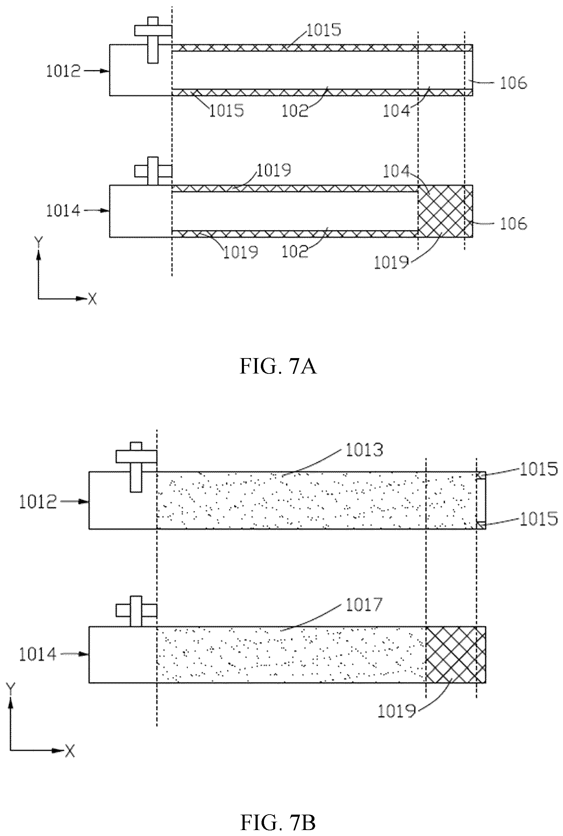

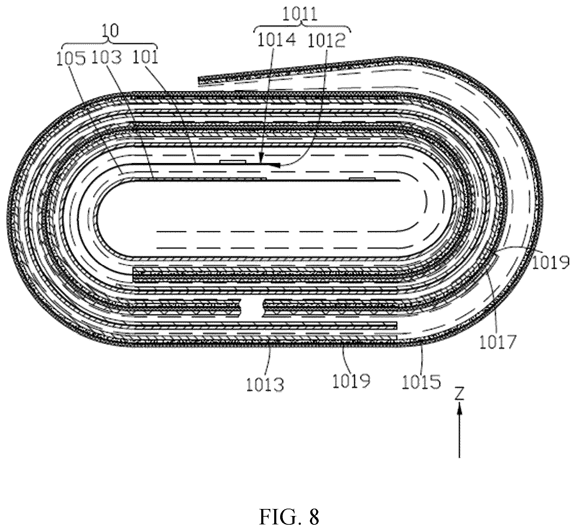

Referring to FIG. 2 and FIG. 7A, the first insulation layer 1015 is disposed at the first end 1016 of the first region 102, the first end 1016 of the second region 104, the first end 1016 of the third region 106, the second end 1018 of the first region 102, the second end 1018 of the second region 104, and the second end 1018 of the third region 106. The second insulation layer 1019 is disposed at the first end 1016 of the first region 102, the second end 1018 of the first region 102, the second region 104, and the third region 106. The first electrode plate 101 shown in FIG. 7A is further coated with an active material layer to obtain the first electrode plate 101 shown in FIG. 7B. Referring to FIG. 7B, the first active material layer 1013 is disposed on the first surface 1012 of the first region 102 and the first surface 1012 of the second region 104. The second active material layer 1017 is disposed on the second surface 1014 of the first region 102. The first electrode plate 101, the separator 105, and the second electrode plate 103 shown in FIG. 7B are wound to obtain a jelly-roll structure shown in FIG. 8.

When the electrode assembly 10 shown in FIG. 8 is accommodated in the accommodation device 50, the first part 1041 contacts the first accommodation portion 51, and the second part 1042 contacts the second accommodation portion 52. Understandably, the first insulation layer 1015 disposed at the first end 1016 of the second region 104 and the second end 1018 of the second region 104 is located in both the first accommodation portion 51 and the second accommodation portion 52. The second insulation layer 1019 disposed in the second region 104 is located in both the first accommodation portion 51 and the second accommodation portion 52.

For the material composition of the second insulation layer 1019, refer to the material composition of the first insulation layer 1015, details of which are omitted here. In some embodiments, the second insulation layer 1019 and the first insulation layer 1015 include the same material that contains substantially the same content of ingredients. In this application, the content of an ingredient of a material in the insulation layer is a mass percent of the ingredient in the insulation layer. In this application, two values are referred to as being "substantially equal" or "substantially the same" when the rate of difference between the two values is within 20%. Understandably, depending on the test method, two values being "substantially equal" or "substantially the same" may mean that the rate of difference between the two values is within 15%, within 10%, within 5%, or the like instead. The rate of difference between two values is a ratio of an absolute value of a difference between the two values to the smaller of the two values. In some embodiments, the second insulation layer 1019 and the first insulation layer 1015 include different types of materials.

Further, the extension length of the second insulation layer 1019 in the first region 102 along the width direction of the electrode plate is not greater than 10 mm. In some embodiments, the extension length of the first insulation layer 1015 is 2 mm to 10 mm, for example, 4 mm to 8 mm, 4 mm to 6 mm, or the like. In some embodiments, the extension length of the first insulation layer 1015 is not less than 2 mm. Generally, the larger the extension length of the second insulation layer 1019 along the width direction Y of the electrode plate, the more effectively the voltage drop failure can be prevented. However, the second insulation layer 1019 occupies an internal space of the electrode assembly 10, thereby reducing the energy density of the electrode assembly 10. As found by the applicant of this application in experiments, when the extension length of the second insulation layer 1019 falls within the range of 2 mm to 10 mm, the hazard of voltage drop failure can be effectively prevented (for example, by 90% or more), and the impact on the energy density of the electrode assembly 10 is within an acceptable range. Further, when the extension length of the second insulation layer 1019 is not greater than 2 mm, the hazard of voltage drop failure can be effectively prevented (for example, by approximately 70%), and the impact on the energy density of the electrode assembly 10 is insignificant.

Further, a ratio of the extension length of the second insulation layer 1019 along the width direction Y of the electrode plate to the extension length of the first current collector 1011 along the width direction Y of the electrode plate is not less than 50%, where the second insulation layer is located in the second region 104 or the third region 106.

In an embodiment, the first electrode plate 101 is a positive electrode plate, and the second electrode plate 103 includes a second current collector. Along the width direction Y of the electrode plate, a rate of difference between the extension length (width) of the first current collector 1011 and the extension length (width) of the second current collector is not greater than 5%. Due to measurement errors, when the rate of difference between the width of the first current collector 1011 and the width of the second current collector is not greater than 5%, it is considered that the width is equal or substantially equal between the first current collector 1011 and the second current collector. A method for calculating the rate of difference is: rate of difference = (width of the second current collector - width of the first current collector 1011)/width of the first current collector 1011. Therefore, the rate of difference between the width of the first current collector 1011 and the width of the second current collector being not greater than 5% is equivalent to that the extension length of the first current collector 1011 along the width direction Y of the electrode plate is equal to the extension length of the second current collector along the width direction Y of the electrode plate. In this way, the separator 105 can be clamped by the edges of the first current collector 1011 and the second current collector, and the separator 105 is less likely to slip, thereby preventing the hazard of voltage drop failure more effectively.

Further, the first electrode plate 101 and the second electrode plate 103 may be prepared by a conventional method in the art. For example, the first active material layer 1013 and the second active material layer 1017 may be made of lithium cobalt oxide (LiCoO₂), conductive carbon black (Super P), polyvinylidene difluoride (PVDF), and N-methyl-pyrrolidone (NMP), and the like, without being limited in this application. The separator 105 may be a separator commonly used in the art, such as a polyethylene (PE) separator or a polypropylene (PP) separator, without being limited in this application.

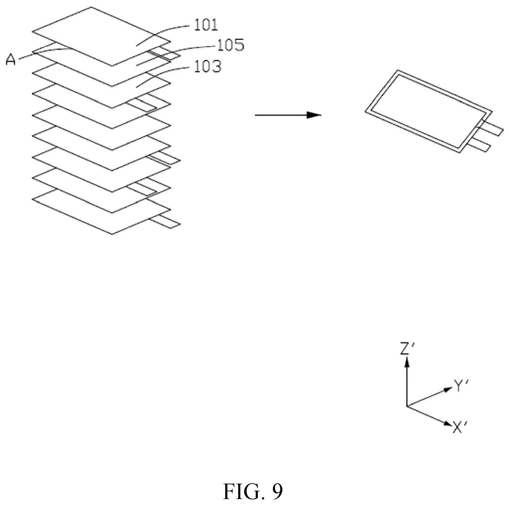

Referring to FIG. 9, instead, the electrode assembly 10 may be formed by stacking the first electrode plate 101, the second electrode plate 103, and the separator 105 along the first direction Z'. The first direction Z' is defined as the thickness direction of the electrode assembly 10. The second direction X' is perpendicular to the first direction Z', and the third direction Y' is perpendicular to the second direction X'. The second direction X' may be a length direction of the electrode plate in the stacked electrode assembly 10, or may be a width direction of the electrode plate. When the second direction X' is the length direction of the electrode plate in the stacked electrode assembly 10, the third direction Y' is the width direction of the electrode plate in the electrode assembly 10. When the second direction X' is the width direction of the electrode plate in the stacked electrode assembly, the third direction Y' is the length direction of the electrode plate in the electrode assembly.

For details of the first electrode plate 101, the second electrode plate 103, the separator 105, the first insulation layer 1015, and the second insulation layer 1019, refer to the description above, and the details are omitted here.

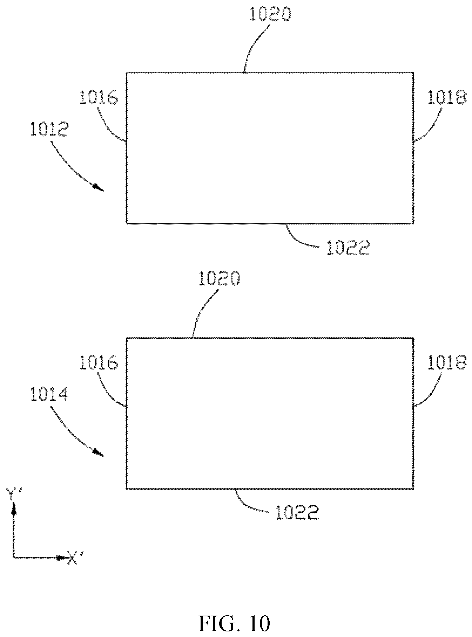

Referring to FIG. 10, the first current collector 1011 includes a first end 1016 and a second end 1018 that are disposed along the second direction X', and a third end 1020 and a fourth end 1022 that are disposed along the third direction Y'. The first insulation layer 1015 is disposed on at least one of the first end 1016, the second end 1018, the third end 1020, or the fourth end 1022.

In an embodiment, the electrochemical device 100 further includes a second insulation layer 1019 disposed on the second surface 1014. The second insulation layer 1019 is disposed on at least one of the first end 1016, the second end 1018, the third end 1020, or the fourth end 1022.

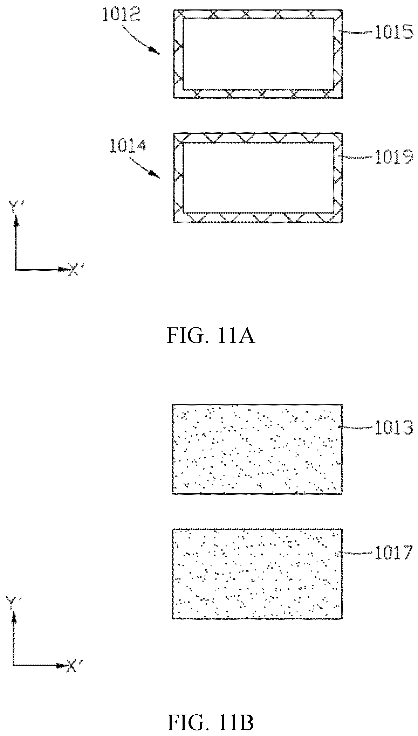

Referring to FIG. 11A, the first insulation layer 1015 is disposed at the first end 1016, the second end 1018, the third end 1020, and the fourth end 1022. The second insulation layer 1019 is disposed at the first end 1016, the second end 1018, the third end 1020, and the fourth end 1022. The first electrode plate shown in FIG. 11A is further coated with an active material layer to obtain the first electrode plate shown in FIG. 11B. Referring to FIG. 11B, the first active material layer 1013 is disposed on the first surface 1012, and the second active material layer 1017 is disposed on the second surface 1014. The first electrode plate 101, the separator 105, and the second electrode plate 103 shown in FIG. 11B are stacked to obtain the electrode assembly 10 shown in FIG. 9.

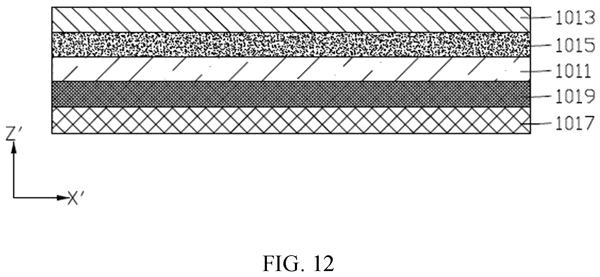

Refer to FIG. 12, which is an enlarged view of a part A in FIG. 9, where the part A is the fourth end 1022 of the first electrode plate 101. As shown in FIG. 12, along the third direction Z', the first electrode plate 101 includes a first current collector 1011, a first insulation layer 1015 and a second insulation layer 1019 that are disposed on two surfaces of the first current collector 1011 respectively, a first active material layer 1013 disposed on the first insulation layer 1015, and a second active material layer 1017 disposed on the second insulation layer 1019.

Further, the extension length of the first insulation layer 1015 along the second direction X' is not greater than 10 mm. Preferably, the extension length of the first insulation layer 1015 along the second direction X' falls within the range of 2 mm to 10 mm.

Further, the extension length of the second insulation layer 1019 along the second direction X' is not greater than 10 mm. Preferably, the extension length of the second insulation layer 1019 along the second direction X' falls within the range of 2 mm to 10 mm.

The following further describes this application with reference to specific embodiments and comparative embodiments.

### Embodiment 1

### (1) Preparing a positive electrode plate (the first electrode plate)

Coating the ends of the first region, the second region, and the third region on the first surface of the positive current collector (the first current collector) aluminum foil with a layer of 4 mm-wide strip-like aluminum oxide ceramic (the first insulation layer), and coating the end of the first region of the second surface with a layer of 4 mm-wide strip-like aluminum oxide ceramic (the second insulation layer) to obtain the positive electrode plate shown in FIG. 4A.

Mixing lithium cobalt oxide (LiCoO₂) as a positive active material, conductive carbon black (Super P), and polyvinylidene difluoride (PVDF) at a mass ratio of 97.5: 1.0: 1.5, adding N-methyl-pyrrolidone (NMP) as a solvent, blending the mixture into a slurry with a solid content of 75%, and stirring the slurry evenly. Applying a coating of the slurry evenly onto the second region and the third region of the first surface that have been coated with the first insulation layer, drying at a temperature of 90 °C, and then applying a coating of the slurry onto the second region of the second surface. Performing, after completion of the coating, cold-pressing on the positive active material layer of the electrode plate until the compacted density reaches 4.0 g/cm³, and then performing auxiliary steps such as tab welding and tape sticking to finish the preparation process of the positive electrode plate.

### (2) Preparing a negative electrode plate

Mixing graphite as a negative active material, conductive carbon black (Super P), and styrene butadiene rubber (SBR) at a mass ratio of 96: 1.5: 2.5, adding deionized water as a solvent, blending the mixture into a slurry with a solid content of 70%, and stirring the slurry evenly. Coating the second current collector copper foil with the slurry evenly, where the weight of the negative effective material on the second electrode plate is 95 g/m². Drying at a temperature of 110 °C, thereby completing the single-sided coating of the negative electrode plate. Then coating the other side in the same way. Performing, after completion of the coating, cold-pressing on the negative active material layer of the electrode plate until the compacted density reaches 1.7 g/cm³. Then performing auxiliary steps such as tab welding and tape sticking to finish the preparation process of the double-side-coated negative electrode plate.

### (3) Preparing an electrolytic solution

Mixing ethylene carbonate (EC), ethyl methyl carbonate (EMC), and diethyl carbonate (DEC) at a mass ratio of EC: EMC: DEC = 30: 50: 20 in a dry argon atmosphere to form an organic solvent, then adding lithium salt hexafluorophosphate (LiPF₆) into the organic solvent to dissolve, and mixing the solution evenly to obtain an electrolytic solution in which a lithium salt concentration is 1.15 mol/L.

### (4) Preparing an electrochemical device

Using a 15 µm-thick polyethylene (PE) film as a separator, stacking the prepared positive electrode plate, separator, and negative electrode plate sequentially, and winding the plates to obtain the jelly-roll structure shown in FIG. 1, where the side that is of the positive electrode plate and coated with the first insulation layer is oriented to the winding center, and the other side is oriented away from the winding center. Placing the electrode assembly in an accommodation device (aluminum plastic film), where the first insulation layer is located in both the first accommodation portion (the shallow pit side) and the second accommodation portion (the deep pit side). Performing top-and-side sealing, electrolyte injection, and chemical formation (charging at a constant current of 0.02 C until the voltage reaches 3.3 V, and then charging at a constant current of 0.1 C until the voltage reaches 3.6 V) to obtain an electrochemical device of 90 mm in length, 66 mm in width, and 4.8 mm in thickness.

### Illustrative Example 2

This illustrative example not part of the invention differs from Embodiment 1 in: the structure of the electrochemical device is a stacked structure, and the first end, the second end, the third end, and the fourth end of the positive electrode plate are all coated with a 4 mm-wide strip-like aluminum oxide ceramic layer (the first insulation layer). Other settings are the same as those in Embodiment 1, and are omitted here.

### Comparative Embodiment 1

This comparative embodiment differs from Embodiment 1 in that the preparation process of the positive electrode plate does not include the steps of being coated with the first insulation layer and the second insulation layer. Other settings are the same as those in Embodiment 1, and are omitted here.

Performing a drop test on the electrochemical devices prepared in Embodiment 1, Embodiment 2, and Comparative Embodiment 1: Dropping a fully charged electrochemical device from a 1.2 m height onto a hard rubber board, and checking whether the electrochemical device is broken, leaking, deformed, or exploding. If none of the above consequences occurs, the drop test is passed. The test results are: All the 10 electrochemical devices in Embodiment 1 have passed the drop test, all the 10 electrochemical devices in Embodiment 2 have passed the drop test, and merely 4 of the 10 electrochemical devices in Comparative Embodiment 1 have passed the drop test.

The test results of the drop test show that the voltage drop failure caused by the drop of the electrochemical device in the embodiment group is suppressed significantly, and the insulation layer disposed between the current collector and the active material layer can effectively improve the performance such as suppressing the voltage drop failure caused by the drop of the electrochemical device.

In the electrochemical device and the electronic device according to this application, the insulation layer is disposed between the current collector and the active material layer to block up an electronic channel in this region. Even if the positive electrode plate contacts the negative electrode plate due to shrinkage of the separator, no short circuit occurs because the electrode plates in the insulation layer region are deenergized, thereby alleviating the problem of voltage drop failure. In addition, the electrical performance of the electrochemical device and the electronic device is not affected because the electrolyte content of the electrochemical device according to this application is not reduced.

What is described above is some specific embodiments of this application, but this application is not limited to the embodiments in practical applications. Other variations and modifications, which may be made by a person of ordinary skill in the art based on the technical conception of this application, fall within the protection scope of this application.

## Claims

1. An electrochemical device (100), comprising an electrode assembly (10), wherein the electrode assembly (10) comprises a first electrode plate (101), a second electrode plate (103), and a separator (105) located between the first electrode plate (101) and the second electrode plate (103); **characterized in that**, the electrode assembly (10) is formed by winding the first electrode plate (101), the second electrode plate (103), and the separator (105) around a winding center, the first electrode plate (101) comprises:
- a first current collector (1011) including a first region (102), a second region (104), and a third region (106) that are disposed along a length direction X of the electrode plate (103),
- a first active material layer (1013), and
- a first insulation layer (1015);
wherein the first region (102) is a double-side-coated region, where both the side oriented toward the winding center and the side oriented away from the winding center are coated with the active material layer (1013), the second region (104) is a single-side-coated region, where the side oriented toward the winding center is coated with the active material layer;
wherein the first current collector (1011) comprises a first surface (1012) and a second surface (1014) disposed opposite to each other, the first surface (1012) facing toward the winding center of the electrode assembly (10);
the first active material layer (1013) is disposed on the first surface (1012); and
the first insulation layer (1015) is located between the first current collector (1011) and the first active material layer (1013),
wherein the first insulation layer (1015) is directly disposed on the first electrode plate (101);
wherein the first insulation layer (1015) is at least disposed in at least one of the following regions: a first end (1016) of the first region (102), a first end (1016) of the second region (104), and a first end (1016) of the third region (106); or a second end (1018) of the first region (102), a second end (1018) of the second region (104), and a second end (1018) of the third region (106).

2. The electrochemical device (100) according to claim 1, **characterized in that** the electrode assembly (10) is formed by winding the first electrode plate (101), the second electrode plate (103), and the separator (105); the first surface (1012) is disposed facing toward a winding center of the electrode assembly (10), and the second surface (1014) is disposed facing away from the winding center of the electrode assembly (10).

3. The electrochemical device (100) according to claim 1, **characterized in that** the electrochemical device (100) further comprises a second active material layer (1017) disposed on the second surface (1014);
the first current collector (1011) comprises a first region (102), a second region (104), and a third region (106);
the first region (102), the second region (104), and the third region (106) are disposed along a length direction of the electrode plate (X);
the first active material layer (1013) is disposed on the first surface (1012) of the first region (102) and the first surface (1012) of the second region (104); and
the second active material layer (1017) is disposed on the second surface (1014) of the first region (102).

4. The electrochemical device (100) according to claim 3, **characterized in that** the electrochemical device (100) further comprises a tab (30) electrically connected to the first current collector (1011); wherein the first current collector (1011) comprises a first end (1016) and a second end (1018) that are disposed along a width direction of the electrode plate (Y); the tab (30) is disposed at the first end (1016); and
the first insulation layer (1015) is disposed in at least one of the following regions:
a first end (1016) of the first region (102), a first end (1016) of the second region (104), and a first end (1016) of the third region (106); or
a second end (1018) of the first region (102), a second end (1018) of the second region (104), and a second end (1018) of the third region (106).

5. The electrochemical device (100) according to claim 3, **characterized in that** the electrochemical device (100) further comprises a tab (30) electrically connected to the first current collector (1011); wherein the first current collector (1011) comprises a first end (1016) and a second end (1018) that are disposed along a width direction of the electrode plate (Y), and the tab (30) is disposed at the first end (1016); and
the electrochemical device (100) further comprises a second insulation layer (1019) disposed on the second surface (1014), the second insulation layer (1019) is disposed on at least one of the first end (1016) or the second end (1018) of the first region (102), and the second insulation layer (1019) is located between the first current collector (1011) and the second active material layer (1017).

6. The electrochemical device (100) according to claim 5, **characterized in that** the second insulation layer (1019) comprises a second insulation material; and the second insulation material comprises at least one of aluminum oxide, zirconium oxide, or chrome oxide.

7. The electrochemical device (100) according to claim 5, **characterized in that** an extension length of the second insulation layer (1019) along the width direction of the electrode plate (Y) is not greater than 10 mm.

8. The electrochemical device (100) according to claim 5, **characterized in that** the second insulation layer (1019) is further disposed in at least one of the second region (104) or the third region (106).

9. The electrochemical device (100) according to claim 8, **characterized in that** the second region (104) comprises a first part (1041) and a second part (1042) that are disposed along a length direction of the electrode plate (X), and the second insulation layer (1019) is further disposed at the second part (1042).

10. The electrochemical device (100) according to claim 9, **characterized in that** the electrochemical device (100) further comprises an accommodation device (50) accomodating the electrode assembly (10), the accommodation device (50) comprises a first accommodation portion (51) and a second accommodation portion (52), a depth of the first accommodation portion (51) is less than a depth of the second accommodation portion (52); and, when accommodated in the accommodation device (50), the first part (1041) contacts the first accommodation portion (51), and the second part (1042) contacts the second accommodation portion (52).

11. The electrochemical device (100) according to claim 8, **characterized in that** a ratio of an extension length of the second insulation layer (1019) along the width direction of the electrode plate (Y) to an extension length of the first current collector (1011) along the width direction of the electrode plate (Y) is not less than 50%.

12. The electrochemical device (100) according to claim 1, **characterized in that** an extension length of the first insulation layer (1015) along a width direction of the electrode plate (Y) is not greater than 10 mm.

13. The electrochemical device (100) according to claim 1, **characterized in that** the first insulation layer (1015) comprises a first insulation material; and the first insulation material comprises at least one of aluminum oxide, zirconium oxide, or chrome oxide.

14. The electrochemical device (100) according to claim 1, **characterized in that** the first electrode plate (101) is a positive electrode plate, the second electrode plate (103) comprises a second current collector; and, along a width direction of the electrode plate (Y), a rate of difference between an extension length of the first current collector (1011) and an extension length of the second current collector is not greater than 5%.

15. The electrochemical device (100) according to claim 1, **characterized in that** the electrode assembly (10) is formed by stacking the first electrode plate (101), the second electrode plate (103), and the separator (105) along a first direction (Z'); the first current collector (1011) comprises a first end (1016) and a second end (1018) that are disposed along a second direction (X'), and a third end (1020) and a fourth end (1022) that are disposed along a third direction (Y'), the second direction (X') is perpendicular to the first direction (Z'), the third direction (Y') is perpendicular to the second direction (X'); and the first insulation layer (1015) is disposed on at least one of the first end (1016), the second end (1018), the third end (1020), or the fourth end (1022).

16. The electrochemical device (100) according to claim 15, **characterized in that** an extension length of the first insulation layer (1015) along the second direction (X') is not greater than 10 mm.

17. The electrochemical device (100) according to claim 15, **characterized in that** the electrochemical device (100) further comprises a second insulation layer (1019) disposed on the second surface (1014); and the second insulation layer (1019) is disposed on at least one of the first end (1016), the second end (1018), the third end (1020), or the fourth end (1022).

18. The electrochemical device (100) according to claim 17, **characterized in that** an extension length of the second insulation layer (1019) along the second direction (X') is not greater than 10 mm.

19. An electronic device, **characterized in that** the electronic device comprises the electrochemical device (100) according to any one of claims 1 to 18, and the electrochemical device (100) supplies power to the electronic device.

## Patentansprüche

1. Elektrochemische Vorrichtung (100), umfassend eine Elektrodenbaugruppe (10), wobei die Elektrodenbaugruppe (10) eine erste Elektrodenplatte (101), eine zweite Elektrodenplatte (103) und einen Separator (105) umfasst, der sich zwischen der ersten Elektrodenplatte (101) und der zweiten Elektrodenplatte (103) befindet; **dadurch gekennzeichnet, dass** die Elektrodenbaugruppe (10) durch Wickeln der ersten Elektrodenplatte (101), der zweiten Elektrodenplatte (103) und des Separators (105) um eine Wickelmitte herum gebildet wird, wobei die erste Elektrodenplatte (101) umfasst:
- einen ersten Stromabnehmer (1011), der einen ersten Bereich (102), einen zweiten Bereich (104) und einen dritten Bereich (106) einschließt, die entlang einer Längenrichtung X der Elektrodenplatte (103) angeordnet sind,
- eine erste aktive Materialschicht (1013), und
- eine erste Isolationsschicht (1015);
wobei der erste Bereich (102) ein doppelseitig beschichteter Bereich ist, wobei sowohl die zur Wickelmitte gerichtete Seite als auch die von der Wickelmitte weg gerichtete Seite mit der aktiven Materialschicht (1013) beschichtet sind, wobei der zweite Bereich (104) ein einseitig beschichteter Bereich ist, wobei die zur Wickelmitte gerichtete Seite mit der aktiven Materialschicht beschichtet ist;
wobei der erste Stromabnehmer (1011) eine erste Oberfläche (1012) und eine zweite Oberfläche (1014) umfasst, die gegenüberliegend angeordnet sind, wobei die erste Oberfläche (1012) zur Wickelmitte der Elektrodenbaugruppe (10) zeigt;
die erste aktive Materialschicht (1013) auf der ersten Oberfläche (1012) angeordnet ist; und
die erste Isolationsschicht (1015) zwischen dem ersten Stromabnehmer (1011) und der ersten aktiven Materialschicht (1013) angeordnet ist,
wobei die erste Isolationsschicht (1015) direkt auf der ersten Elektrodenplatte (101) angeordnet ist;
wobei die erste Isolationsschicht (1015) mindestens in einem der folgenden Bereiche angeordnet ist: einem ersten Ende (1016) des ersten Bereichs (102), einem ersten Ende (1016) des zweiten Bereichs (104) und einem ersten Ende (1016) des dritten Bereichs (106); oder einem zweiten Ende (1018) des ersten Bereichs (102), einem zweiten Ende (1018) des zweiten Bereichs (104) und einem zweiten Ende (1018) des dritten Bereichs (106).

2. Elektrochemische Vorrichtung (100) nach Anspruch 1, **dadurch gekennzeichnet, dass** die Elektrodenbaugruppe (10) durch Wickeln der ersten Elektrodenplatte (101), der zweiten Elektrodenplatte (103) und des Separators (105) gebildet wird; die erste Oberfläche (1012) zu einer Wickelmitte der Elektrodenbaugruppe (10) zeigend angeordnet ist, und die zweite Oberfläche (1014) von der Wickelmitte der Elektrodenbaugruppe (10) weg gerichtet angeordnet ist.

3. Elektrochemische Vorrichtung (100) nach Anspruch 1, **dadurch gekennzeichnet, dass** die elektrochemische Vorrichtung (100) ferner eine zweite aktive Materialschicht (1017) umfasst, die auf der zweiten Oberfläche (1014) angeordnet ist;
der erste Stromabnehmer (1011) einen ersten Bereich (102), einen zweiten Bereich (104) und einen dritten Bereich (106) umfasst;
der erste Bereich (102), der zweite Bereich (104) und der dritte Bereich (106) entlang einer Längenrichtung der Elektrodenplatte (X) angeordnet sind;
die erste aktive Materialschicht (1013) auf der ersten Oberfläche (1012) des ersten Bereichs (102) und der ersten Oberfläche (1012) des zweiten Bereichs (104) angeordnet ist; und
die zweite aktive Materialschicht (1017) auf der zweiten Oberfläche (1014) des ersten Bereichs (102) angeordnet ist.

4. Elektrochemische Vorrichtung (100) nach Anspruch 3, **dadurch gekennzeichnet, dass** die elektrochemische Vorrichtung (100) ferner eine Lasche (30) umfasst, die elektrisch mit dem ersten Stromabnehmer (1011) verbunden ist; wobei der erste Stromabnehmer (1011) ein erstes Ende (1016) und ein zweites Ende (1018) umfasst, die entlang einer Breitenrichtung der Elektrodenplatte (Y) angeordnet sind; die Lasche (30) an dem ersten Ende (1016) angeordnet ist; und
die erste Isolationsschicht (1015) in mindestens einem der folgenden Bereiche angeordnet ist:
einem ersten Ende (1016) des ersten Bereichs (102), einem ersten Ende (1016) des zweiten Bereichs (104) und einem ersten Ende (1016) des dritten Bereichs (106); oder
einem zweiten Ende (1018) des ersten Bereichs (102), einem zweiten Ende (1018) des zweiten Bereichs (104) und einem zweiten Ende (1018) des dritten Bereichs (106).

5. Elektrochemische Vorrichtung (100) nach Anspruch 3, **dadurch gekennzeichnet, dass** die elektrochemische Vorrichtung (100) ferner eine Lasche (30) umfasst, die elektrisch mit dem ersten Stromabnehmer (1011) verbunden ist; wobei der erste Stromabnehmer (1011) ein erstes Ende (1016) und ein zweites Ende (1018) umfasst, die entlang einer Breitenrichtung der Elektrodenplatte (Y) angeordnet sind, und die Lasche (30) an dem ersten Ende (1016) angeordnet ist; und
die elektrochemische Vorrichtung (100) ferner eine zweite Isolationsschicht (1019) umfasst, die auf der zweiten Oberfläche (1014) angeordnet ist, die zweite Isolationsschicht (1019) an mindestens einem des ersten Endes (1016) oder des zweiten Endes (1018) des ersten Bereichs (102) angeordnet ist, und die zweite Isolationsschicht (1019) sich zwischen dem ersten Stromabnehmer (1011) und der zweiten aktiven Materialschicht (1017) befindet.

6. Elektrochemische Vorrichtung (100) nach Anspruch 5, **dadurch gekennzeichnet, dass** die zweite Isolationsschicht (1019) ein zweites Isolationsmaterial umfasst; und das zweite Isolationsmaterial mindestens eines aus Aluminiumoxid, Zirkonoxid oder Chromoxid umfasst.

7. Elektrochemische Vorrichtung (100) nach Anspruch 5, **dadurch gekennzeichnet, dass** eine Erstreckungslänge der zweiten Isolationsschicht (1019) entlang der Breitenrichtung der Elektrodenplatte (Y) nicht größer als 10 mm ist.

8. Elektrochemische Vorrichtung (100) nach Anspruch 5, **dadurch gekennzeichnet, dass** die zweite Isolationsschicht (1019) ferner in mindestens einem des zweiten Bereichs (104) oder des dritten Bereichs (106) angeordnet ist.

9. Elektrochemische Vorrichtung (100) nach Anspruch 8, **dadurch gekennzeichnet, dass** der zweite Bereich (104) einen ersten Teil (1041) und einen zweiten Teil (1042) umfasst, die entlang einer Längenrichtung der Elektrodenplatte (X) angeordnet sind, und die zweite Isolationsschicht (1019) ferner an dem zweiten Teil (1042) angeordnet ist.

10. Elektrochemische Vorrichtung (100) nach Anspruch 9, **dadurch gekennzeichnet, dass** die elektrochemische Vorrichtung (100) ferner eine Aufnahmevorrichtung (50) umfasst, die die Elektrodenbaugruppe (10) aufnimmt, die Aufnahmevorrichtung (50) einen ersten Aufnahmeabschnitt (51) und einen zweiten Aufnahmeabschnitt (52) umfasst, eine Tiefe des ersten Aufnahmeabschnitts (51) kleiner ist als eine Tiefe des zweiten Aufnahmeabschnitts (52); und bei Aufnahme in der Aufnahmevorrichtung (50) der erste Teil (1041) den ersten Aufnahmeabschnitt (51) berührt und der zweite Teil (1042) den zweiten Aufnahmeabschnitt (52) berührt.

11. Elektrochemische Vorrichtung (100) nach Anspruch 8, **dadurch gekennzeichnet, dass** ein Verhältnis einer Erstreckungslänge der zweiten Isolationsschicht (1019) entlang der Breitenrichtung der Elektrodenplatte (Y) zu einer Erstreckungslänge des ersten Stromabnehmers (1011) entlang der Breitenrichtung der Elektrodenplatte (Y) nicht weniger als 50 % beträgt.

12. Elektrochemische Vorrichtung (100) nach Anspruch 1, **dadurch gekennzeichnet, dass** eine Erstreckungslänge der ersten Isolationsschicht (1015) entlang einer Breitenrichtung der Elektrodenplatte (Y) nicht größer als 10 mm ist.

13. Elektrochemische Vorrichtung (100) nach Anspruch 1, **dadurch gekennzeichnet, dass** die erste Isolationsschicht (1015) ein erstes Isolationsmaterial umfasst; und das erste Isolationsmaterial mindestens eines aus Aluminiumoxid, Zirkonoxid oder Chromoxid umfasst.

14. Elektrochemische Vorrichtung (100) nach Anspruch 1, **dadurch gekennzeichnet, dass** die erste Elektrodenplatte (101) eine positive Elektrodenplatte ist, die zweite Elektrodenplatte (103) einen zweiten Stromabnehmer umfasst; und entlang einer Breitenrichtung der Elektrodenplatte (Y) ein Differenzverhältnis zwischen einer Erstreckungslänge des ersten Stromabnehmers (1011) und einer Erstreckungslänge des zweiten Stromabnehmers nicht größer als 5 % ist.

15. Elektrochemische Vorrichtung (100) nach Anspruch 1, **dadurch gekennzeichnet, dass** die Elektrodenbaugruppe (10) durch Stapeln der ersten Elektrodenplatte (101), der zweiten Elektrodenplatte (103) und des Separators (105) entlang einer ersten Richtung (Z') gebildet wird; der erste Stromabnehmer (1011) ein erstes Ende (1016) und ein zweites Ende (1018) umfasst, die entlang einer zweiten Richtung (X') angeordnet sind, und ein drittes Ende (1020) und ein viertes Ende (1022), die entlang einer dritten Richtung (Y') angeordnet sind, wobei die zweite Richtung (X') senkrecht zur ersten Richtung (Z') ist, die dritte Richtung (Y') senkrecht zur zweiten Richtung (X') ist; und die erste Isolationsschicht (1015) an mindestens einem des ersten Endes (1016), des zweiten Endes (1018), des dritten Endes (1020) oder des vierten Endes (1022) angeordnet ist.

16. Elektrochemische Vorrichtung (100) nach Anspruch 15, **dadurch gekennzeichnet, dass** eine Erstreckungslänge der ersten Isolationsschicht (1015) entlang der zweiten Richtung (X') nicht größer als 10 mm ist.

17. Elektrochemische Vorrichtung (100) nach Anspruch 15, **dadurch gekennzeichnet, dass** die elektrochemische Vorrichtung (100) ferner eine zweite Isolationsschicht (1019) umfasst, die auf der zweiten Oberfläche (1014) angeordnet ist; und die zweite Isolationsschicht (1019) an mindestens einem des ersten Endes (1016), des zweiten Endes (1018), des dritten Endes (1020) oder des vierten Endes (1022) angeordnet ist.

18. Elektrochemische Vorrichtung (100) nach Anspruch 17, **dadurch gekennzeichnet, dass** eine Erstreckungslänge der zweiten Isolationsschicht (1019) entlang der zweiten Richtung (X') nicht größer als 10 mm ist.

19. Elektronische Vorrichtung, **dadurch gekennzeichnet, dass** die elektronische Vorrichtung die elektrochemische Vorrichtung (100) nach einem der Ansprüche 1 bis 18 umfasst und die elektrochemische Vorrichtung (100) die elektronische Vorrichtung mit Strom versorgt.

## Revendications

1. Un dispositif électrochimique (100), comprenant un ensemble d'électrode (10), dans lequel l'ensemble d'électrode (10) comprend une première plaque d'électrode (101), une deuxième plaque d'électrode (103), et un séparateur (105) situé entre la première plaque d'électrode (101) et la deuxième plaque d'électrode (103) ; **caractérisé en ce que**, l'ensemble d'électrode (10) est formé par l'enroulement de la première plaque d'électrode (101), de la deuxième plaque d'électrode (103), et du séparateur (105) autour d'un centre d'enroulement, la première plaque d'électrode (101) comprend :
- un premier collecteur de courant (1011) incluant une première région (102), une deuxième région (104), et une troisième région (106) qui sont disposées le long d'une direction de longueur X de la plaque d'électrode (103),
- une première couche de matière active (1013), et
- une première couche isolante (1015) ; dans lequel la première région (102) est une région recouverte des deux faces, où les deux faces orientée vers le centre d'enroulement et orientée à l'opposé du centre d'enroulement sont recouvertes de la couche de matière active (1013), la deuxième région (104) est une région recouverte d'une seule face, où la face orientée vers le centre d'enroulement est recouverte de la couche de matière active ; dans lequel le premier collecteur de courant (1011) comprend une première surface (1012) et une deuxième surface (1014) disposées opposées l'une à l'autre, la première surface (1012) étant orientée vers le centre d'enroulement de l'ensemble d'électrode (10) ; la première couche de matière active (1013) est disposée sur la première surface (1012) ; et la première couche isolante (1015) est située entre le premier collecteur de courant (1011) et la première couche de matière active (1013), dans laquelle la première couche isolante (1015) est disposée directement sur la première plaque d'électrode (101) ; dans lequel la première couche isolante (1015) est disposée au moins dans l'une des régions suivantes : une première extrémité (1016) de la première région (102), une première extrémité (1016) de la deuxième région (104), et une première extrémité (1016) de la troisième région (106) ; ou une deuxième extrémité (1018) de la première région (102), une deuxième extrémité (1018) de la deuxième région (104), et une deuxième extrémité (1018) de la troisième région (106).

2. Le dispositif électrochimique (100) selon la revendication 1, **caractérisé en ce que** l'ensemble d'électrode (10) est formé par l'enroulement de la première plaque d'électrode (101), de la deuxième plaque d'électrode (103), et du séparateur (105) ; la première surface (1012) est disposée orientée vers un centre d'enroulement de l'ensemble d'électrode (10), et la deuxième surface (1014) est disposée orientée à l'opposé du centre d'enroulement de l'ensemble d'électrode (10).

3. Le dispositif électrochimique (100) selon la revendication 1, **caractérisé en ce que** le dispositif électrochimique (100) comprend en outre une deuxième couche de matière active (1017) disposée sur la deuxième surface (1014) ; le premier collecteur de courant (1011) comprend une première région (102), une deuxième région (104), et une troisième région (106) ; la première région (102), la deuxième région (104), et la troisième région (106) sont disposées le long d'une direction de longueur de la plaque d'électrode (X) ; la première couche de matière active (1013) est disposée sur la première surface (1012) de la première région (102) et la première surface (1012) de la deuxième région (104) ; et la deuxième couche de matière active (1017) est disposée sur la deuxième surface (1014) de la première région (102).

4. Le dispositif électrochimique (100) selon la revendication 3, **caractérisé en ce que** le dispositif électrochimique (100) comprend en outre un onglet (30) connecté électriquement au premier collecteur de courant (1011) ; dans lequel le premier collecteur de courant (1011) comprend une première extrémité (1016) et une deuxième extrémité (1018) qui sont disposées le long d'une direction de largeur de la plaque d'électrode (Y) ; l'onglet (30) est disposé à la première extrémité (1016) ; et la première couche isolante (1015) est disposée au moins dans l'une des régions suivantes : une première extrémité (1016) de la première région (102), une première extrémité (1016) de la deuxième région (104), et une première extrémité (1016) de la troisième région (106) ; ou une deuxième extrémité (1018) de la première région (102), une deuxième extrémité (1018) de la deuxième région (104), et une deuxième extrémité (1018) de la troisième région (106).

5. Le dispositif électrochimique (100) selon la revendication 3, **caractérisé en ce que** le dispositif électrochimique (100) comprend en outre un onglet (30) connecté électriquement au premier collecteur de courant (1011) ; dans lequel le premier collecteur de courant (1011) comprend une première extrémité (1016) et une deuxième extrémité (1018) qui sont disposées le long d'une direction de largeur de la plaque d'électrode (Y), et l'onglet (30) est disposé à la première extrémité (1016) ; et le dispositif électrochimique (100) comprend en outre une deuxième couche isolante (1019) disposée sur la deuxième surface (1014), la deuxième couche isolante (1019) est disposée sur au moins l'une de la première extrémité (1016) ou de la deuxième extrémité (1018) de la première région (102), et la deuxième couche isolante (1019) est située entre le premier collecteur de courant (1011) et la deuxième couche de matière active (1017).

6. Le dispositif électrochimique (100) selon la revendication 5, **caractérisé en ce que** la deuxième couche isolante (1019) comprend un deuxième matériau isolant ; et le deuxième matériau isolant comprend au moins l'un parmi l'oxyde d'aluminium, l'oxyde de zirconium, ou l'oxyde de chrome.

7. Le dispositif électrochimique (100) selon la revendication 5, **caractérisé en ce qu'**une longueur de prolongation de la deuxième couche isolante (1019) le long de la direction de largeur de la plaque d'électrode (Y) n'est pas supérieure à 10 mm.

8. Le dispositif électrochimique (100) selon la revendication 5, **caractérisé en ce que** la deuxième couche isolante (1019) est en outre disposée dans au moins l'une de la deuxième région (104) ou de la troisième région (106).

9. Le dispositif électrochimique (100) selon la revendication 8, **caractérisé en ce que** la deuxième région (104) comprend une première partie (1041) et une deuxième partie (1042) qui sont disposées le long d'une direction de longueur de la plaque d'électrode (X), et la deuxième couche isolante (1019) est en outre disposée au niveau de la deuxième partie (1042).

10. Le dispositif électrochimique (100) selon la revendication 9, **caractérisé en ce que** le dispositif électrochimique (100) comprend en outre un dispositif de logement (50) accueillant l'ensemble d'électrode (10), le dispositif de logement (50) comprend une première partie de logement (51) et une deuxième partie de logement (52), une profondeur de la première partie de logement (51) est inférieure à une profondeur de la deuxième partie de logement (52) ; et, lorsqu'il est accueilli dans le dispositif de logement (50), la première partie (1041) entre en contact avec la première partie de logement (51), et la deuxième partie (1042) entre en contact avec la deuxième partie de logement (52).

11. Le dispositif électrochimique (100) selon la revendication 8, **caractérisé en ce qu'**un rapport entre une longueur de prolongation de la deuxième couche isolante (1019) le long de la direction de largeur de la plaque d'électrode (Y) et une longueur de prolongation du premier collecteur de courant (10 11) le long de la direction de largeur de la plaque d'électrode (Y) n'est pas inférieur à 50 %.

12. Le dispositif électrochimique (100) selon la revendication 1, **caractérisé en ce qu'**une longueur de prolongation de la première couche isolante (1015) le long d'une direction de largeur de la plaque d'électrode (Y) n'est pas supérieure à 10 mm.

13. Le dispositif électrochimique (100) selon la revendication 1, **caractérisé en ce que** la première couche isolante (1015) comprend un premier matériau isolant ; et le premier matériau isolant comprend au moins l'un parmi l'oxyde d'aluminium, l'oxyde de zirconium, ou l'oxyde de chrome.

14. Le dispositif électrochimique (100) selon la revendication 1, **caractérisé en ce que** la première plaque d'électrode (101) est une plaque d'électrode positive, la deuxième plaque d'électrode (103) comprend un deuxième collecteur de courant ; et, le long d'une direction de largeur de la plaque d'électrode (Y), un pourcentage de différence entre une longueur de prolongation du premier collecteur de courant (1011) et une longueur de prolongation du deuxième collecteur de courant n'est pas supérieur à 5 %.

15. Le dispositif électrochimique (100) selon la revendication 1, **caractérisé en ce que** l'ensemble d'électrode (10) est formé par l'empilement de la première plaque d'électrode (101), de la deuxième plaque d'électrode (103), et du séparateur (105) selon une première direction (Z') ; le premier collecteur de courant (1011) comprend une première extrémité (1016) et une deuxième extrémité (1018) qui sont disposées selon une deuxième direction (X'), et une troisième extrémité (1020) et une quatrième extrémité (1022) qui sont disposées selon une troisième direction (Y'), la deuxième direction (X') est perpendiculaire à la première direction (Z'), la troisième direction (Y') est perpendiculaire à la deuxième direction (X') ; et la première couche isolante (1015) est disposée sur au moins l'une de la première extrémité (1016), de la deuxième extrémité (1018), de la troisième extrémité (1020), ou de la quatrième extrémité (1022).

16. Le dispositif électrochimique (100) selon la revendication 15, **caractérisé en ce qu'**une longueur de prolongation de la première couche isolante (1015) selon la deuxième direction (X') n'est pas supérieure à 10 mm.

17. Le dispositif électrochimique (100) selon la revendication 15, **caractérisé en ce que** le dispositif électrochimique (100) comprend en outre une deuxième couche isolante (1019) disposée sur la deuxième surface (1014) ; et la deuxième couche isolante (1019) est disposée sur au moins l'une de la première extrémité (1016), de la deuxième extrémité (1018), de la troisième extrémité (1020), ou de la quatrième extrémité (1022).

18. Le dispositif électrochimique (100) selon la revendication 17, **caractérisé en ce qu'**une longueur de prolongation de la deuxième couche isolante (1019) selon la deuxième direction (X') n'est pas supérieure à 10 mm.

19. Un dispositif électronique, **caractérisé en ce que** le dispositif électronique comprend le dispositif électrochimique (100) selon l'une quelconque des revendications 1 à 18, et le dispositif électrochimique (100) alimente le dispositif électronique.
